# EUROPEAN PATENT SPECIFICATION

(11) **EP 2 677 176 B1**
(45) Date of publication and mention of the grant of the patent: **19.12.2018**
(21) Application number: 12305729.1
(22) Date of filing: 22.06.2012
(51) Int. Cl.: F04D 25/06, F04D 29/058, F16C 32/04

(54) **Compact electric centrifugal compressor**
Kompakter elektrischer Zentrifugalkompressor
Compresseur centrifuge électrique compact

(43) Date of publication of application: 25.12.2013
(73) Proprietor: SKF MAGNETIC MECHATRONICS, 27950 Saint-Marcel (FR)
(72) Inventor: Lateb, Ramdane, 27200 Vernon (FR); Schroeder, Ulrich, 76130 Mont Saint Aignan (FR); Da Silva, Joaquim, 45240 Sennely (FR); Helene, Eric, 76350 Oissel (FR); Ponson, Frédéric, 37230 Luynes (FR)
(74) Representative: Desormiere, Pierre-Louis

(56) References cited:
- EP-A1- 2 234 243
- JP-A- 8 326 530
- US-A1- 2009 121 571

## Description

### BACKGROUND OF THE INVENTION

### 1. Field of the Invention

The present invention relates to a compact electric centrifugal compressor which is more specifically but not exclusively adapted to be used in a Heat Ventilation Air Conditioning (HVAC) installation for vehicles.

The vehicles may include in particular terrestrial vehicles such as hybrid electric vehicles (HEV) or electric vehicles (EV) as well as aircrafts or other kinds of vehicles.

### 2. Description of the Related Art

Conventional Electric compressors, such as HVAC compressors for vehicles are typically associated with an electric motor.

An example of such electric motor driven compressor is given in patent document US 6 183 215 B1.

Such types of electric motor driven compressors have many drawbacks linked to lubrication, refrigerants, low operating speed, friction losses and loss of compactness.

Two main categories of HVAC electric compressors are used in HEV/EV vehicles: rotary like vane compressors and oscillating like scroll type compressors.

Both types of electric compressors which are associated with an electric motor have the following drawbacks:
- Lubricants are needed for different mechanical parts,
- It is necessary to check compatibility of lubricant oil with refrigerants (such as for example the haloalkane refrigerant R134a or the more recently used hydrofluoroolefin refrigerant HFO-1234yf),
- Lubricants should be carefully chosen to protect the electric motor windings from the risk of insulation failure,

- An oil separator and leak detection devices are required to avoid contamination of the electric systems in EV/HEV vehicles,
- The conventional electric compressors have a speed which is limited and cannot exceed 10,000 rpm,
- Friction losses are detrimental to the operation of the electric compressor.

Document JP 8 326 530 A discloses an air pump comprising a rotary shaft which is supported by magnetic bearings which are further provided with the electrically driving function of rotary-driving the rotary shaft.

### SUMMARY OF THE INVENTION

Therefore, it is desired to provide an electric compressor which can solve most of these problems.

The invention is intended more especially, although not exclusively, to automotive air conditioning applications and therefore further aims at providing an electric compressor which takes into account the high level of vibrations generated in a vehicle and which is as compact as possible.

The invention is defined in the appended claims.

According to an embodiment of the present invention, there is provided a compact electric compressor comprising a motor portion and a centrifugal compressor portion driven by said motor portion through a shaft, wherein said motor portion comprises first and second radial bearingless motors spaced apart along said shaft and configured for rotating said shaft and maintaining it in a defined radial position in a contactless manner during functional operation of said electric compressor and axial electromagnetic means located between said first and second radial bearingless motors and configured for maintaining said shaft in a defined axial position during functional operation of said electric compressor and wherein auxiliary landing bearing are located at each end of the shaft in the vicinity of each of said first and second radial bearingless motors, wherein the axial electromagnetic means comprises an axial bearingless motor.

According to a second embodiment the axial electromagnetic means comprise an active axial magnetic bearing.

Separators may be provided between the radial bearingless motors and the axial electromagnetic means.

More specifically the radial bearingless motors each comprise a rotor portion having a plurality of pole pairs armatures and a stator portion comprising a core with slots for receiving windings configured to impress a motor torque and a radial bearing force.

Separate windings may be provided in the slots of the stator portion for impressing a motor torque and an axial bearing force.

Alternatively common windings may be provided in the slots of the stator portion for impressing a motor torque and an axial bearing force.

The radial bearingless motors comprise a rotor portion chosen among an induction rotor, a permanent magnet rotor, a hysteresis rotor and a reluctance rotor.

According to a specific embodiment the centrifugal compressor portion comprises a wheel at a first end of the shaft and control circuits associated with the radial bearingless motors and the axial electromagnetic means are located at a second end of the shaft and are connected to the radial bearingless motors and the axial electromagnetic means via a feedthrough.

The centrifugal compressor portion may comprise a variety of configurations and in particular may comprise a single wheel, double wheels, tandem wheels or double tandem wheels.

The axial bearingless motor may comprise a rotor portion having a plurality of pole pairs armatures and first and second stator portions each comprising a core with slots respectively for receiving windings configured to impress a motor torque and an axial bearing force, the first and second stator portions being located on each side of the rotor portion.

When the axial electromagnetic means are constituted by an active axial magnetic bearing or thrust bearing, said active axial magnetic bearing may comprise a disc armature integral with the shaft and first and second stator electromagnets facing said disc armature in a contactless manner on each side of the latter.

### BRIEF DESCRIPTION OF THE DRAWINGS

Fig. 1 is a schematic longitudinal sectional view of an electric compressor comprising a compressor portion and a motor portion comprising an electric motor, two radial magnetic bearings and a magnetic thrust bearing and further schematically showing a control device;
Fig. 2 is another schematic longitudinal sectional view of an electric compressor comprising a compressor portion and a motor portion comprising an electric motor, two radial magnetic bearings and a magnetic thrust bearing;
Fig. 3 is another schematic longitudinal sectional view of an electric compressor comprising a compressor portion and a motor portion comprising an electric motor, two radial magnetic bearings and a magnetic thrust bearing which is divided into two parts;
Fig. 4 is a schematic longitudinal sectional view of an electric compressor comprising a compressor portion (not shown) and a motor portion comprising two radial bearingless motors and an axial electromagnetic means which can be configured as an axial bearingless motor according to the invention;
Fig. 5 is a perspective view of an axial bearingless motor (the winding being not represented);
Fig. 6 is a perspective view of a radial bearingless motor (the winding being not represented);
Fig. 7 is a schematic view of an example of compressor portion comprising double wheels;
Fig. 8 is a schematic view of an example of compressor portion comprising tandem wheels; and
Fig. 9 is a schematic view of an example of compressor portion comprising double tandem wheels.

### DESCRIPTION OF THE PREFERRED EMBODIMENTS

The present invention will be described in connection with following examples.

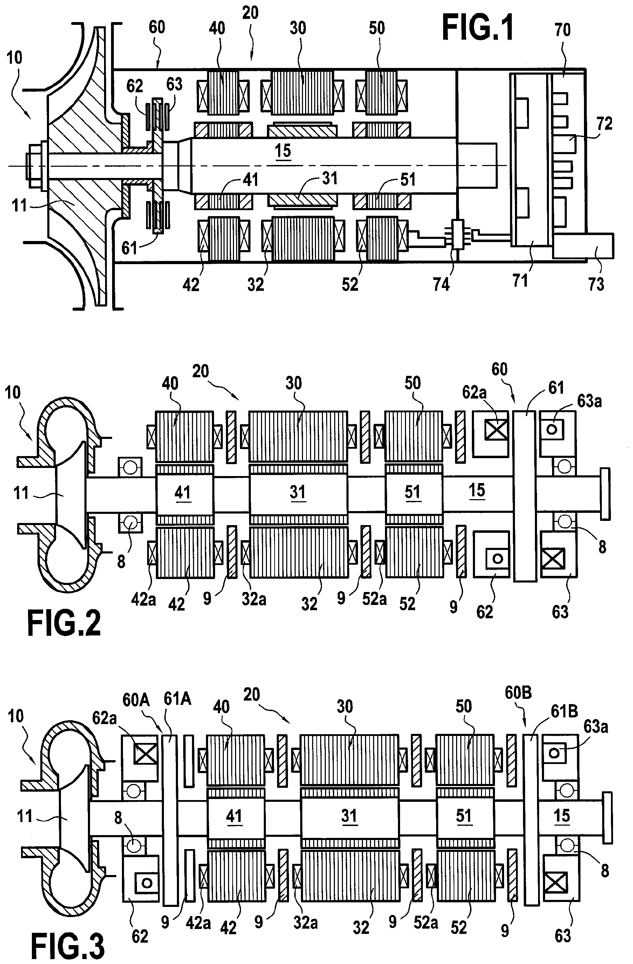

Figure 2 shows an example of a centrifugal electric compressor for heat ventilation air conditioning (HVAC) which may be dedicated for hybrid electric vehicles (HEV) or electric vehicles (EV) or else for aircrafts or other types of vehicles. Such centrifugal electric compressor may also be applied to boost a turbocharger.

A rotor shaft 15 of a motor portion 20 is coupled to a centrifugal compressor wheel 11 of a compressor portion 10 to drive the centrifugal compressor wheel 11.

An electrical motor 30 comprises a rotor 31 which may be of any type chosen among induction rotor, permanent magnet rotor, hysteresis rotor and reluctance rotor. The electrical motor 30 further comprises a stator 32 with windings 32a.

First and second active radial magnetic bearings 40, 50 are located on each side of the electrical motor 30 to support the shaft 15 in levitation during functional operation of the electric compressor. Each active radial magnetic bearing 40, 50 comprises a rotor 41, 51 fast with the shaft 15 and a stator 42, 52 with windings 42a, 52a.

An active axial magnetic bearing 60 (thrust bearing) comprises on the one hand a disc 61 which is mounted perpendicular to the axis of the shaft 15 and constitutes a rotor armature and on the other hand first and second stators 62, 63 each having at least one annular coil or winding 62a, 63a located in a stator 62, 63 which may have a C-shaped core, as shown in figure 2. Alternatively each stator 62, 63 could have an E-shaped core with two coils.

The radial bearing rotors 41, 51 are equipped with ferromagnetic laminations which are held in position by the magnetic fields created by the electromagnets of the stators 42, 52.

The shaft 15 is levitated in a contactless manner due to the radial magnetic bearings. The shaft's position is monitored by sensors (not shown), e.g. of the variable inductive type, which detect any deviation from nominal position and emit signals which are used in a control system (not shown in figure 2) to command currents in the windings 42a, 52a of the radial bearings in order to bring the shaft 15 back to its nominal position. The axial bearing 60 is based on the same principle and sensors (not shown) send signals to a controller to adjust command currents in the coils 62a, 63a of the axial bearing 60 to adjust the axial position of the shaft 15.

Auxiliary landing bearings 8 are used for supporting the shaft 15 essentially during a starting or stopping operation of the motor portion 20, but also during brief intermittent periods in case of shock-loads due to the usually high level of vibrations present in a vehicle.

Generally speaking where a rotary shaft is suspended by means of an active magnetic suspension servo-controlled on the basis of sensors for detecting the position of the rotary shaft, auxiliary bearings, also known as emergency bearings, are provided in order to support the shaft while the machine is being stopped or in the event of a total or partial failure of the magnetic suspension, thereby preventing direct contact between the magnetic circuits of the rotors and the stators of the magnetic bearings or bearingless motors when the windings of the stator electromagnets are not properly powered, thus avoiding damage to the laminations thereof. In normal operation, auxiliary bearings leave clearance about the rotary shaft and do not themselves rotate. The clearance provided for the auxiliary bearings is generally about one half the width of the air gap of the magnetic bearings or bearingless motors.

The auxiliary landing/touch down bearings 8 may have a variety of designs and may be for example rolling bearings, needle bearings, plain bearings, bushings, etc...

Separators 9 may be located between the stator windings of the magnetic bearings 40, 50, 60 and of the electrical motor 30.

The casing or flanges and cooling systems with a refrigerant are conventional and are not represented in the drawings.

In figure 2 the axial bearing 60 comprises a disc armature 61 and two stators 62, 63 located at an end of the shaft 15, whereas the compressor wheel is located at the other end of the shaft. However, as shown in figure 1, the axial bearing 60 can also be located on the same side than the compressor wheel 11.

As shown in figure 1, control circuits 70 comprising a variable frequency drive 71 and amplifiers 72 associated with the electrical motor 30 and the radial electromagnetic bearings 40, 50, 60 are integrated in a flange and located at a second end of the iron shaft 15. The control circuits 70 are connected to the electrical motor 30 and to the radial and axial electromagnetic bearings via a feedthrough 74. A connector 73 serves to connect the control circuits 70 to a further controller located remote from the electric compressor.

Figure 3 shows an example which is similar to the example of figure 2, but the axial magnetic bearing is split into two parts 60A, 60B which are located at both ends of the shaft 15. A disc armature 61A integral with the shaft 15 is located at a first end of the shaft 15 near the compressor wheel 11 and cooperates with a first stator 62 having a first coil 62a which could be similar to the stator 62 of figure 1. A disc armature 61B integral with the shaft 15 is located at a second end of the shaft 15 and cooperates with a second stator 63 having a second coil 63a which could be similar to the stator 63 of figure 2.

Figures 1 to 3 show a compressor portion 10 having a single wheel. However other designs of the compressor portion 10 may be used in combination with the different embodiments disclosed herein.

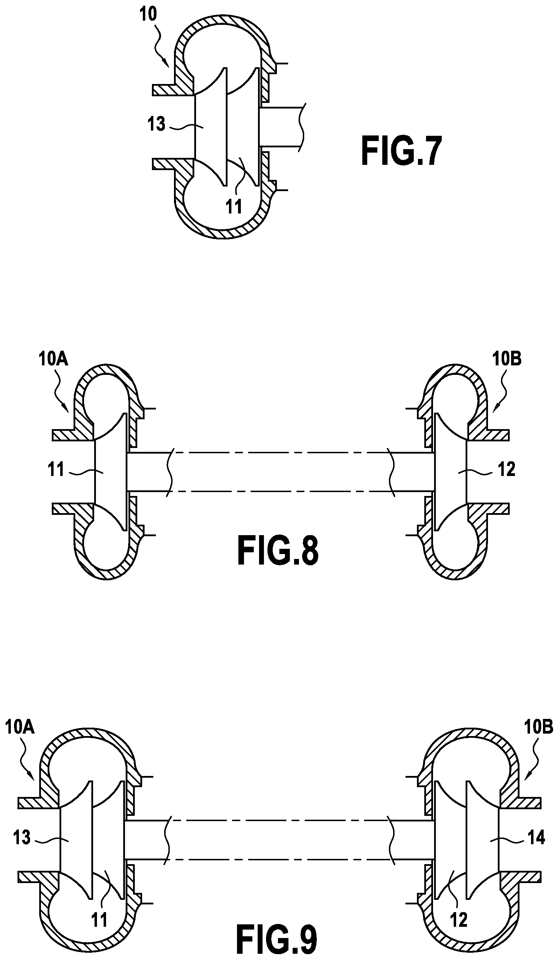

Thus as shown in figure 7, a compressor portion 10 may include double wheels 11, 13. As shown in figure 8, a compressor portion 10A, 10B may include tandem wheels 11, 12. As shown in figure 9, a compressor portion 10A, 10B may include double tandem wheels 11, 13, 12, 14. The configurations of compressor wheels according to figures 7 to 9 are intended either to increase the pressure ratio or to increase the flow.

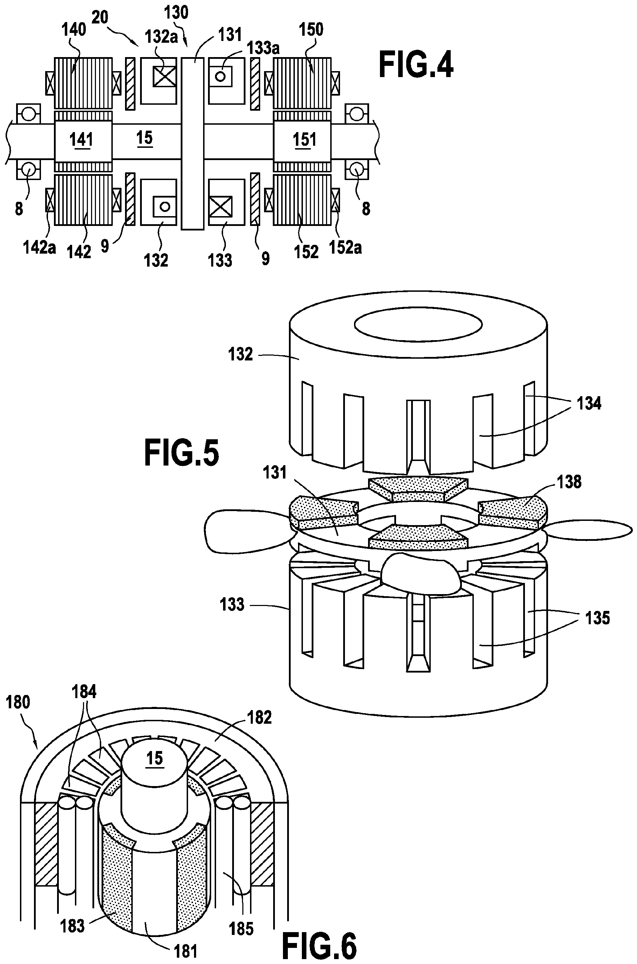

The invention will now be described in connection with figures 4 to 6.

Figure 4 shows an embodiment with an iron shaft 15 and a motor portion 20 which are more compact than the examples of figures 1 to 3 since the electrical motor 30 and the radial magnetic bearings 40, 50 are replaced by first and second radial bearingless motors 140, 150. In figure 4, the compressor portion 10 has been omitted but may be realized as previously described with reference to figures 1 to 3 and 7 to 9.

The embodiment of figure 4 allows reducing the shaft length and hence improves the overall layout.

The radial bearingless motors 140, 150 each comprise a disc-like central armature 141, 151 integral with the shaft 15 and a stator 142, 152 with windings 142a, 152a.

An example of radial bearingless motor 180 is represented in figure 6. Such radial bearingless motor 180 comprises a rotor 181 integral with the shaft 15 and a stator 182 with slots 184 for receiving coils 185. The rotor 181 carries different structural elements 183 depending on the chosen principle (permanent magnet, induction, switched reluctance, hysteresis).

Basically the stator windings 185 achieve both functions of torque windings and suspension force windings. As an example if two magnetic fields, which may be created by two winding sets with a difference in the pole pair number of one, are superposed, a torque and a radial force will be produced. It is thus possible for example to combine a 4-pole motor winding of a reluctance motor with a 2-pole bearing winding, but many other combinations are possible.

Patent document US 6727618 B1 discloses an example of bearingless switched reluctance motor.

In the stator portions 142, 152, 182 of the radial bearingless motors 140, 150, 180 separated coils may be used to impress the bearing force and the motor torque.

Alternatively the needed bearing force and motor torque may be generated in each coil by combined windings. In such a case a single coil will carry jointly the required motor and bearing ampere-turns.

In figure 4 reference numeral 130 may designate an axial bearingless motor as well as an axial active magnetic bearing. In the latter case the disc armature 131 and the stator portions 132, 133 with windings 132a and 133a respectively may be constituted like the thrust bearing 60 illustrated in figure 2, i.e. the windings 132a, 133a would be constituted by annular coils centered on the axis of the shaft 15. The axial magnetic bearing 130 could also comprise stator portions 132, 133 having a C-shape with a single annular coil 132a, 133a as shown in figure 4 or having an E-shape with two concentric annular coils.

According to the invention, reference numeral (130) designates an axial bearingless motor. The embodiment of figure 4 comprises first and second radial bearingless motors 140, 150 and a central axial bearingless motor located between the first and second radial bearingless motors 140, 150. The axial bearingless motor 130 also comprises a disc armature 131 integral with the shaft 15 and first and second stator portions 132, 133 located on each side of the disc armature 131, but the windings 132a and 133a are differently arranged.

Figure 5 shows in perspective an example of a possible configuration of an axial bearingless motor 130. The axial bearingless motor 130 of figure 5 comprises a rotor portion 131 having a plurality of pole pairs armatures 138 and first and second stator portions 132, 133 each comprising a core with slots 134, 135 respectively for receiving windings (not shown in figure 5) configured to impress a motor torque and an axial bearing force, the first and second stator portions 132, 133 being located on each side of the rotor portion 131.

In the stator portions 132, 133 of the axial bearingless motor separated coils may be used to impress the bearing force and the motor torque.

Alternatively the needed bearing force and motor torque may be generated in each coil by combined windings. In such a case a single coil will carry jointly the required motor and bearing ampere-turns.

A plurality of pole pairs armatures 138 are shown in figure 5 by way of example. However the rotor 131 may carry different structural elements depending on the chosen principle (permanent magnet, induction, switched reluctance, hysteresis).

As a non-limiting example, the stator 132 and the rotor 131 with permanent magnets 138 may constitute a permanent magnet motor, where the permanent magnets 138 on the rotor surface produce an axial force in a first direction (upward direction in the configuration of figure 5), whereas the stator 133 and rotor 131 may constitute a synchronous reluctance motor, where the winding currents of the synchronous reluctance motor produce an adjustable axial force in the opposite direction with respect to the first direction (downward direction in the configuration of figure 5). The axial position of the rotor can thus be controlled by the currents of the synchronous motor. However as mentioned above other combinations of motor types may be chosen as soon as the axial bearingless motor 130 achieves the two functions of impressing a motor torque and an axial bearing force.

Active radial magnetic bearings 140 and 150 similar to previously described active radial magnetic bearings 40 and 50 and comprising a rotor armature 141, 151 and a stator 142, 152 with windings 142a, 152a may be located on each side of an axial bearingless motor 130.

However as mentioned above first and second radial bearingless motors 140, 150 are preferably used in combination with an axial bearingless motor 130 or a thrust magnetic bearing.

Although a preferred embodiment has been shown and described, it should be understood that any changes and modifications may be made therein without departing from the scope of the invention as defined in the appended claims.

## Claims

1. A compact electric compressor comprising a motor portion (20) and a centrifugal compressor portion (10) driven by said motor portion (20) through a shaft (15), wherein said motor portion (20) comprises first and second radial bearingless motors (140, 150) spaced apart along said shaft (15) and configured for rotating said shaft (15) and maintaining it in a defined radial position in a contactless manner during functional operation of said electric compressor and axial electromagnetic means (130) configured for maintaining said shaft (15) in a defined axial position during functional operation of said electric compressor, wherein auxiliary landing bearings (8) are located at each end of the shaft (15) in the vicinity of each of said first and second radial bearingless motors (140, 150), **characterised in that** said axial electromagnetic means (130) are located between said first and second radial bearingless motors (140, 150) and comprise an axial bearingless motor.

2. The electric compressor according to claim 1, wherein separators (9) are provided between the radial bearingless motors (140, 150) and said axial electromagnetic means (130).

3. The electric compressor according to claim 1, wherein the radial bearingless motors (140, 150) each comprise a rotor portion (181) having a plurality of pole pairs armatures (183) and a stator portion (182) comprising a core with slots (184) for receiving windings configured to impress a motor torque and a radial bearing force.

4. The electric compressor according to claim 3, wherein separate windings are provided in the slots (184) of the stator portion (182) for impressing a motor torque and an axial bearing force.

5. The electric compressor according to claim 3, wherein common windings are provided in the slots (184) of the stator portion (182) for impressing a motor torque and an axial bearing force.

6. The electric compressor according to claim 1, wherein the radial bearingless motors (140, 150) comprise a rotor portion (181) chosen among an induction rotor, a permanent magnet rotor, a hysteresis rotor and a reluctance rotor.

7. The electric compressor according to claim 1, wherein the centrifugal compressor portion (10) comprises a wheel (11) at a first end of said shaft (15) and wherein control circuits (70) associated with the radial bearingless motors (140,150) and said axial electromagnetic means (130) are located at a second end of said shaft (15) and are connected to said radial bearingless motors (140, 150) and said axial electromagnetic means (130) via a feedthrough (74).

8. The electric compressor according to anyone of claims 1 to 6, wherein the centrifugal compressor portion (10A, 10B) comprises tandem wheels (11, 12).

9. The electric compressor according to anyone of claims 1 to 6, wherein the centrifugal compressor portion (10A, 10B) comprises double tandem wheels (11, 13, 12, 14).

10. The electric compressor according to anyone of claims 1 to 7, wherein the centrifugal compressor portion (10) comprises double wheels (11, 13).

11. The electric compressor according to claim 1, wherein the axial bearingless motor (130) comprises a rotor portion (131) having a plurality of pole pairs armatures (138) and first and second stator portions (132, 133) each comprising a core with slots (134, 135) respectively for receiving windings configured to impress a motor torque and an axial bearing force, the first and second stator portions (132, 133) being located on each side of the rotor portion (131).

12. The electric compressor according to any one of claims 1 to 11, wherein it is applied to a heat ventilation air conditioning system for vehicles.

## Patentansprüche

1. Kompakter elektrischer Kompressor, umfassend einen Motorabschnitt (20) und einen Zentrifugalkompressorabschnitt (10), der durch den Motorabschnitt (20) durch eine Welle (15) angetrieben wird, wobei der Motorabschnitt (20) erste und zweite lagerlose Radialmotoren (140, 150) umfasst, die entlang der Welle (15) in einem Abstand angeordnet und zum Drehen der Welle (15) und kontaktlosen Halten derselben in einer definierten radialen Position während des funktionsgemäßen Betriebs des elektrischen Kompressor ausgelegt sind, und elektromagnetische axiale Mittel (130), die zum Halten der Welle (15) in einer definierten axialen Position während des funktionsgemäßen Betriebs des elektrischen Kompressors ausgelegt sind, wobei Hilfs-Aufsetzlager (8) an jedem Ende der Welle (15) in der Nähe jedes der ersten und zweiten lagerlosen Radialmotoren (140, 150) angeordnet sind, **dadurch gekennzeichnet, dass** die elektromagnetischen axialen Mittel (130) zwischen den ersten und zweiten lagerlosen Radialmotoren (140, 150) angeordnet sind und einen lagerlosen Axialmotor umfassen.

2. Elektroscher Kompressor nach Anspruch 1, wobei Trennelemente (9) zwischen den lagerlosen Radialmotoren (140, 150) und den elektromagnetischen axialen Mitteln (130) vorgesehen sind.

3. Elektrischer Kompressor nach Anspruch 1, wobei die lagerlosen Radialmotoren (140, 150) jeweils einen Rotorabschnitt (181) mit einer Mehrzahl von Polpaar-Ankern (183) und einen Statorabschnitt (182) mit einem Kern mit Schlitzen (184) zum Empfangen von Wicklungen umfassen, die zum Aufprägen eines Motordrehmoments und einer radialen Lagerkraft ausgelegt sind.

4. Elektrischer Kompressor nach Anspruch 3, wobei separate Wicklungen in den Schlitzen (184) des Statorabschnitts (182) zum Aufprägen eines Motordrehmoments und einer axialen Lagerkraft vorgesehen sind.

5. Elektrischer Kompressor nach Anspruch 3, wobei gemeinsame Wicklungen in den Schlitzen (184) des Statorabschnitts (182) zum Aufprägen eines Motordrehmoments und einer axialen Lagerkraft vorgesehen sind.

6. Elektrischer Kompressor nach Anspruch 1, wobei die lagerlosen Radialmotoren (140, 150) einen Rotorabschnitt (181) umfassen, der unter einem Induktionsrotor, einem Dauermagnetrotor, einem Hystereserotor und einem Reluktanzrotor ausgewählt ist.

7. Elektrischer Kompressor nach Anspruch 1, wobei der Zentrifugalkompressorabschnitt (10) ein Rad (11) an einem ersten Ende der Welle (15) umfasst, und wobei Steuerschaltungen (70), die mit den lagerlosen Radialmotoren (140, 150) und den lagerlosen axialen Mitteln (130) assoziiert sind, an einem zweiten Ende der Welle (15) angeordnet und mit den lagerlosen Radialmotoren (140, 150) und den lagerlosen axialen Mitteln (130) durch eine Durchkontaktierung (74) verbunden sind.

8. Elektrischer Kompressor nach einem der Ansprüche 1 bis 6, wobei der Zentrifugalkompressorabschnitt (10A, 10B) Tandemräder (11, 12) umfasst.

9. Elektrischer Kompressor nach einem der Ansprüche 1 bis 6, wobei der Zentrifugalkompressorabschnitt (10A, 10B) Doppel-Tandemräder (11, 13, 12, 14) umfasst.

10. Elektrischer Kompressor nach einem der Ansprüche 1 bis 7, wobei der Zentrifugalkompressorabschnitt (10) Doppelräder (11, 13) umfasst.

11. Elektrischer Kompressor nach Anspruch 1, wobei der lagerlose Axialmotor (130) einen Rotorabschnitt (131) mit einer Mehrzahl von Polpaar-Ankern (138) und erste und zweite Statorabschnitte (132, 133) umfasst, die jeweils einen Kern mit Schlitzen (134, 135) zum jeweiligen Empfangen von Wicklungen umfassen, die zum Aufprägen eines Motordrehmoments und einer axialen Lagerkraft ausgelegt sind, wobei die ersten und zweiten Statorabschnitte (132, 133) auf jeder Seite des Rotorabschnitts (131) angeordnet sind.

12. Elektrischer Kompressor nach einem der Ansprüche 1 bis 11, wobei er auf ein Klimaregelsystem mit Wärmeventilation angewendet wird.

## Revendications

1. Compresseur électrique compact comprenant une partie moteur (20) et une partie compresseur centrifuge (10) entraînée par ladite partie moteur (20) par l'intermédiaire d'un arbre (15), ladite partie moteur (20) comprenant des premier et second moteurs sans palier radial (140, 150) espacés le long dudit arbre (15) et conçus pour faire tourner ledit arbre (15) et le maintenir dans une position radiale définie sans contact pendant une opération fonctionnelle dudit compresseur électrique, et des moyens électromagnétiques axiaux (130) conçus pour maintenir ledit arbre (15) dans une position axiale définie pendant une opération fonctionnelle dudit compresseur électrique, des paliers auxiliaires de réception au sol (8) étant situés à chaque extrémité de l'arbre (15) à proximité de chacun desdits premier et second moteurs sans palier radial (140, 150),
le compresseur électrique compact étant **caractérisé en ce que** lesdits moyens électromagnétiques axiaux (130) sont situés entre lesdits premier et second moteurs sans palier radial (140, 150) et comprennent un moteur sans palier axial.

2. Compresseur électrique selon la revendication 1, dans lequel des séparateurs (9) sont situés entre les moteurs sans palier radial (140, 150) et lesdits moyens électromagnétiques axiaux (130).

3. Compresseur électrique selon la revendication 1, dans lequel les moteurs sans palier radial (140, 150) comprennent chacun une partie rotor (181) ayant une pluralité d'armatures de paires de pôles (183), et une partie stator (182) comprenant un noyau avec des encoches (184) pour recevoir des enroulements conçus pour exercer un couple moteur et une force d'appui radiale.

4. Compresseur électrique selon la revendication 3, dans lequel des enroulements séparés sont situés dans les encoches (184) de la partie stator (182) pour exercer un couple moteur et une force d'appui radiale.

5. Compresseur électrique selon la revendication 3, dans lequel des enroulements communs sont situés dans les encoches (184) de la partie stator (182) pour exercer un couple moteur et une force d'appui radiale.

6. Compresseur électrique selon la revendication 1, dans lequel les moteurs sans palier radial (140, 150) comprennent une partie rotor (181) choisie parmi un rotor à induction, un rotor à aimant permanent, un rotor à hystérésis et un rotor à réluctance.

7. Compresseur électrique selon la revendication 1, dans lequel la partie compresseur centrifuge (10) comprend une roue (11) à une première extrémité dudit arbre (15), et dans lequel des circuits de commande (70) associés aux moteurs sans palier radial (140, 150) et auxdits moyens électromagnétiques axiaux (130) sont situés à une seconde extrémité dudit arbre (15) et sont connectés auxdits moteurs sans palier radial (140, 150) et auxdits moyens électromagnétiques axiaux (130) par l'intermédiaire d'un trou d'interconnexion (74).

8. Compresseur électrique selon l'une quelconque des revendications 1 à 6, dans lequel la partie compresseur centrifuge (10A, 10B) comprend des roues en tandem (11, 12).

9. Compresseur électrique selon l'une quelconque des revendications 1 à 6, dans lequel la partie compresseur centrifuge (10A, 10B) comprend des doubles roues en tandem (11, 13, 12, 14).

10. Compresseur électrique selon l'une quelconque des revendications 1 à 7, dans lequel la partie compresseur centrifuge (10) comprend des doubles roues (11, 13).

11. Compresseur électrique selon la revendication 1, dans lequel le moteur sans palier axial (130) comprend une partie rotor (131) ayant une pluralité d'armatures de paires de pôles (138) et des première et seconde parties stator (132, 133) comprenant chacune un noyau avec des encoches (134, 135) pour recevoir respectivement des enroulements conçus pour exercer un couple moteur et une force d'appui axiale, les première et seconde parties stator (132, 133) étant situées de chaque côté de la partie rotor (131).

12. Compresseur électrique selon l'une quelconque des revendications 1 à 11, ledit compresseur électrique étant appliqué à un système de chauffage, ventilation et climatisation pour véhicules.
